(19) Europäisches Patentamt
European Patent Office
Office européen des brevets

(11) EP 3 828 212 A1

(12) **EUROPEAN PATENT APPLICATION**
published in accordance with Art. 153(4) EPC

(43) Date of publication:
**02.06.2021 Bulletin 2021/22**

(21) Application number: **19840967.4**

(22) Date of filing: **10.06.2019**

(51) Int Cl.:
***C08F 297/04*** *(2006.01)* ***C08F 8/04*** *(2006.01)*

(86) International application number:
**PCT/JP2019/022970**

(87) International publication number:
**WO 2020/021883 (30.01.2020 Gazette 2020/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **24.07.2018 JP 2018138709**

(71) Applicant: **Zeon Corporation**
**Tokyo 100-8246 (JP)**

(72) Inventor: **Yasu, Yusuke**
**Tokyo 100-8246 (JP)**

(74) Representative: **Maiwald Patent- und Rechtsanwaltsgesellschaft mbH**
**Elisenhof**
**Elisenstraße 3**
**80335 München (DE)**

# (54) BLOCK COPOLYMER, PRODUCTION METHOD THEREFOR, HYDROGENATED BLOCK COPOLYMER, POLYMER COMPOSITION, AND MOLDED OBJECT

(57) Provided is a block copolymer that can serve as a precursor of a hydrogenated block copolymer. The block copolymer includes polymer blocks [A] and [B]. The polymer block [A] includes a polycyclic aromatic vinyl monomer unit including at least two monocycles selected from the group consisting of aromatic hydrocarbon monocycles and aromatic heteromonocycles. A mass ratio of proportional content of 1,2-vinyl bonds and proportional content of 1,4-vinyl bonds in the block copolymer is not less than 5/95 and not more than 90/10.

EP 3 828 212 A1

## Description

TECHNICAL FIELD

The present disclosure relates to a block copolymer and method of producing the same, a hydrogenated block copolymer, a polymer composition, and a shaped product.

BACKGROUND

In recent years, hydrogenated block copolymers that are obtained through hydrogenation of a block copolymer including a polymer block formed from a monomer unit including at least two aromatic hydrocarbon monocycles, such as vinylnaphthalene, and a polymer block formed from an aliphatic conjugated diene monomer unit have been attracting interest as materials having excellent optical properties that can be used in formation of optical films and the like.

Patent Literature (PTL) 1 discloses a method of obtaining a hydrogenated block copolymer by using a metal catalyst to hydrogenate an A-B-A triblock copolymer that is obtained through a copolymerization reaction of a specific vinylnaphthalene and a specific diene, and also discloses an optical film formed of this hydrogenated block copolymer.

CITATION LIST

Patent Literature

PTL 1: JP2006-111650A

SUMMARY

(Technical Problem)

However, the hydrogenated block copolymer obtained through hydrogenation of an A-B-A triblock copolymer that is disclosed in PTL 1 has low solubility in organic solvents typically used in hydrogenation reactions. Therefore, the technique disclosed in PTL 1 suffers from a problem that after the hydrogenation reaction ends, the hydrogenated block copolymer precipitates from the organic solvent used in the hydrogenation reaction, which makes handling in a production process difficult.

Accordingly, an object of the present disclosure is to provide a technique for obtaining a hydrogenated block copolymer that is obtained through hydrogenation of a block copolymer including a monomer unit including at least two aromatic hydrocarbon monocycles and an aliphatic conjugated diene monomer unit and that is easy to handle after the hydrogenation reaction.

(Solution to Problem)

The inventor conducted diligent studies with the aim of achieving the objective described above. The inventor conceived of obtaining a hydrogenated block copolymer having high solubility in organic solvents by using a block copolymer that includes polymer blocks including specific monomer units and that has a proportional content of 1,2-vinyl bonds within a specific range as a precursor in a hydrogenation reaction. Moreover, the inventor discovered that a block copolymer obtained through block copolymerization of an aromatic vinyl compound including at least two aromatic hydrocarbon monocycles and an aliphatic conjugated diene compound in the presence of a compound that can adjust the proportional content of 1,2-vinyl bonds in the block copolymer can serve as a precursor of a hydrogenated block copolymer having high solubility in organic solvents, and, in this manner, completed the present disclosure.

Specifically, the present disclosure aims to advantageously solve the problem set forth above, and a presently disclosed block copolymer comprises: a polymer block [A] having an aromatic vinyl compound-derived structural unit as a main component; and a polymer block [B] having an aliphatic conjugated diene compound-derived structural unit as a main component, wherein the polymer block [A] includes a polycyclic aromatic vinyl monomer unit including at least two monocycles selected from the group consisting of aromatic hydrocarbon monocycles and aromatic heteromonocycles, and a mass ratio of proportional content of 1,2-vinyl bonds and proportional content of 1,4-vinyl bonds in the block copolymer, in terms of 1,2-vinyl bonds/1,4-vinyl bonds, is not less than 5/95 and not more than 90/10. As a result of the block copolymer including a specific polycyclic aromatic vinyl monomer unit in the polymer block [A] and having a specific proportional content of 1,2-vinyl bonds and proportional content of 1,4-vinyl bonds in this manner, the block copolymer can be provided as a precursor of a hydrogenated block copolymer having high solubility in organic solvents. Note that the proportional content of 1,2-vinyl bonds and the proportional content of 1,4-vinyl bonds referred to in the present

disclosure can be measured by $^1$H-NMR.

In the presently disclosed block copolymer, proportional content of the aromatic vinyl compound-derived structural unit in the block copolymer is preferably not less than 5 mass% and not more than 95 mass%. This is because the mechanical strength of the block copolymer stabilizes when the proportional content of the aromatic vinyl compound-derived structural unit in the block copolymer is not less than the lower limit set forth above. Moreover, the solubility in organic solvents of a hydrogenated block copolymer obtained through hydrogenation of the block copolymer improves when the proportional content of the aromatic vinyl compound-derived structural unit in the block copolymer is not more than the upper limit set forth above.

In the presently disclosed block copolymer, proportional content of the aliphatic conjugated diene compound-derived structural unit in the block copolymer is preferably not less than 5 mass% and not more than 95 mass%. This is because the solubility in organic solvents of a hydrogenated block copolymer obtained through hydrogenation of the block copolymer can be further increased when the proportional content of the aliphatic conjugated diene compound-derived structural unit in the block copolymer is not less than the lower limit set forth above. Moreover, the mechanical strength of the block copolymer improves when the proportional content of the aliphatic conjugated diene compound-derived structural unit in the block copolymer is not more than the upper limit set forth above.

Note that the proportional content of a structural unit referred to in the present disclosure can be measured by $^1$H-NMR.

Moreover, the present disclosure aims to advantageously solve the problem set forth above, and a presently disclosed hydrogenated block copolymer is a hydrogenated block copolymer that is obtained through hydrogenation of the block copolymer set forth above. This is because by hydrogenating the presently disclosed block copolymer to obtain a hydrogenated block copolymer, it is possible to provide a hydrogenated block copolymer having high solubility in organic solvents.

Furthermore, the present disclosure aims to advantageously solve the problem set forth above, and a presently disclosed polymer composition comprises the hydrogenated block copolymer set forth above. By including the presently disclosed hydrogenated block copolymer in a polymer composition, it is possible to provide a polymer composition that can suitably be used in various applications.

Also, the present disclosure aims to advantageously solve the problem set forth above, and a presently disclosed shaped product is obtained through shaping of the polymer composition set forth above. A shaped product that is obtained through shaping of the presently disclosed polymer composition can suitably be used as an optical component such as an optical film, for example.

Moreover, the present disclosure aims to advantageously solve the problem set forth above, and a presently disclosed method of producing a block copolymer comprises a polymerization step of block copolymerizing an aromatic vinyl compound and an aliphatic conjugated diene compound in the presence of a randomizer, wherein the aromatic vinyl compound includes a polycyclic aromatic vinyl compound including at least two monocycles selected from the group consisting of aromatic hydrocarbon monocycles and aromatic heteromonocycles. Through the presently disclosed method of producing a block copolymer, it is possible to efficiently produce the presently disclosed block copolymer.

In the presently disclosed method of producing a block copolymer, the randomizer is preferably used in an amount of not less than 0.01 mol and not more than 10 mol per 1 mol of a polymerization catalyst. This is because the amount of 1,2-vinyl bonds in the obtained block copolymer can be increased when the used amount of the randomizer is not less than the lower limit set forth above. Moreover, the proportion of triblock copolymer that is obtained can be increased when the used amount of the randomizer is not more than the upper limit set forth above.

(Advantageous Effect)

According to the present disclosure, it is possible to provide a block copolymer that can serve as a precursor of a hydrogenated block copolymer that is easy to handle after a hydrogenation reaction as a result of having high solubility in organic solvents, and also to provide a method of producing this block copolymer. Moreover, according to the present disclosure, it is possible to provide a hydrogenated block copolymer that is easy to handle after a hydrogenation reaction, and also to provide a polymer composition containing this hydrogenated block copolymer. Furthermore, according to the present disclosure, it is possible to provide a shaped product that is obtained through shaping of the presently disclosed polymer composition.

DETAILED DESCRIPTION

The following provides a detailed description of embodiments of the present disclosure.

The presently disclosed block copolymer can be used as a precursor for producing the presently disclosed hydrogenated block copolymer. Moreover, a polymer composition that contains the presently disclosed hydrogenated block copolymer can be used for shaping a shaped product such as an optical film, for example. Furthermore, the

presently disclosed block copolymer can be efficiently produced through the presently disclosed method of producing a block copolymer.

(Block copolymer)

The presently disclosed block copolymer includes a polymer block [A] and a polymer block [B] and can optionally include a polymer block [C]. In the presently disclosed block copolymer, the polymer block [A] includes a polycyclic aromatic vinyl monomer unit including at least two monocycles selected from the group consisting of aromatic hydrocarbon monocycles and aromatic heteromonocycles, and a mass ratio of the proportional content of 1,2-vinyl bonds and the proportional content of 1,4-vinyl bonds (1,2-vinyl bonds/1,4-vinyl bonds) in the block copolymer is not less than 5/95 and not more than 90/10.

<Polymer block [A]>

The polymer block [A] is a polymer block that has an aromatic vinyl compound-derived structural unit as a main component. The proportional content of the aromatic vinyl compound-derived structural unit in the polymer block [A] is normally 60 mass% or more, preferably 70 mass% or more, and more preferably 80 mass% or more, and is normally 100 mass% or less. The polymer block [A] can further include an aliphatic conjugated diene compound-derived structural unit and/or a structural unit derived from another compound as a component other than the aromatic vinyl compound-derived structural unit. The proportional content of the aliphatic conjugated diene compound-derived structural unit and/or structural unit derived from another compound in the polymer block [A] is normally 0 mass% or more, and is normally 40 mass% or less, preferably 30 mass% or less, and more preferably 20 mass% or less. Note that in a case in which the block copolymer includes a plurality of polymer blocks [A], the polymer blocks [A] may be the same or different so long as they satisfy any of the ranges set forth above. The polymer block [A] is required to include a polycyclic aromatic vinyl monomer unit including at least two monocycles selected from the group consisting of aromatic hydrocarbon monocycles and aromatic heteromonocycles.

[Aromatic vinyl compound-derived structural unit]

The polymer block [A] is required to include a polycyclic aromatic vinyl monomer unit as an aromatic vinyl compound-derived structural unit and can optionally include a monocyclic aromatic vinyl monomer unit as an aromatic vinyl compound-derived structural unit.

{Polycyclic aromatic vinyl monomer unit}

The polycyclic aromatic vinyl monomer unit is a monomer unit that includes at least two monocycles selected from the group consisting of aromatic hydrocarbon monocycles and aromatic heteromonocycles. Note that the two or more monocycles that are present in the polycyclic aromatic vinyl monomer unit may be independent of one another or may be fused to form a fused ring. However, from a viewpoint of efficiently obtaining a hydrogenated block copolymer using the presently disclosed block copolymer, the two or more monocycles that are present are preferably fused.

-Aromatic hydrocarbon monocycles-

Examples of aromatic hydrocarbon monocycles include a benzene ring and a substituted benzene ring. Examples of possible substituents include alkyl groups such as a methyl group, an ethyl group, a propyl group, and a t-butyl group; and halogen groups such as a fluoro group, a chloro group, and a bromo group.

-Aromatic heteromonocycles-

Examples of aromatic heteromonocycles include an oxadiazole ring, an oxazole ring, an oxazolopyrazine ring, an oxazolopyridine ring, an oxazolopyridazyl ring, an oxazolopyrimidine ring, a thiadiazole ring, a thiazole ring, a triazine ring, a pyranone ring, a pyran ring, a pyridine ring, a pyridazine ring, a pyrimidine ring, and a pyrrole ring.

Examples of polycyclic aromatic vinyl compounds that can form the polycyclic aromatic vinyl monomer unit include 1-vinylnaphthalene, 2-vinylnaphthalene, and 1,1-diphenylethylene. Of these examples, 1-vinylnaphthalene and 2-vinylnaphthalene are preferable as polycyclic aromatic vinyl compounds because a hydrogenated block copolymer having excellent solubility in organic solvents can be efficiently obtained through hydrogenation of the block copolymer.

{Monocyclic aromatic vinyl monomer unit}

The monocyclic aromatic vinyl monomer unit is a monomer unit that includes one aromatic hydrocarbon monocycle such as described above. Examples of monocyclic aromatic vinyl compounds that can form the monocyclic aromatic vinyl monomer unit include styrene, α-methylstyrene, 2-methylstyrene, 3-methylstyrene, and 4-methylstyrene, with styrene being particularly preferable in terms of ease of industrial acquisition.

Moreover, examples of aliphatic conjugated diene compounds that can be used to form the polymer block [A] include chain conjugated diene (linear conjugated diene or branched conjugated diene) compounds such as 1,3-butadiene and 2-methyl-1,3-butadiene (isoprene), with 1,3-butadiene being particularly preferable in terms of ease of polymerization reaction control.

Moreover, examples of other compounds that can be used to form the polymer block [A] include unsaturated carboxylic acid esters such as methyl acrylate and methyl methacrylate.

[Proportional content of aromatic vinyl compound-derived structural unit]

The proportional content of the aromatic vinyl compound-derived structural unit in the block copolymer is preferably 5 mass% or more, and more preferably 10 mass% or more, and is preferably 95 mass% or less, and more preferably 80 mass% or less. This is because the mechanical strength of the block copolymer stabilizes when the proportional content of the aromatic vinyl compound-derived structural unit in the block copolymer is not less than any of the lower limits set forth above. Moreover, the solubility in organic solvents of a hydrogenated block copolymer obtained through hydrogenation of the block copolymer improves when the proportional content of the aromatic vinyl compound-derived structural unit in the block copolymer is not more than any of the upper limits set forth above.

<Polymer block [B]>

The polymer block [B] is a polymer block that has an aliphatic conjugated diene compound-derived structural unit as a main component. The proportional content of the aliphatic conjugated diene compound-derived structural unit in the polymer block [B] is normally 60 mass% or more, preferably 70 mass% or more, and more preferably 80 mass% or more, and is normally 100 mass% or less. The polymer block [B] may further include an aromatic vinyl compound-derived structural unit and/or a structural unit derived from another compound as components other than the aliphatic conjugated diene compound-derived structural unit. The proportional content of the aromatic vinyl compound-derived structural unit and/or structural unit derived from another compound in the polymer block [B] is normally 0 mass% or more, and is normally 40 mass% or less, preferably 30 mass% or less, and more preferably 20 mass% or less. Note that in a case in which the block polymer includes a plurality of polymer blocks [B], the polymer blocks [B] may be the same or different so long as they satisfy any of the ranges set forth above.

Examples of the aliphatic conjugated diene compound that is used to form the polymer block [B] include chain conjugated diene compounds such as 1,3-butadiene and 2-methyl-1,3-butadiene (isoprene). Of these examples, 1,3-butadiene and 2-methyl-1,3-butadiene (isoprene) are preferable as aliphatic conjugated diene compounds from a viewpoint that they can be efficiently hydrogenated through hydrogenation of the block copolymer.

Examples of aromatic vinyl compounds that can be used to form the polymer block [B] include the aromatic vinyl compound that is used to form the polymer block [A]. Moreover, examples of other compounds that can be used to form the polymer block [B] include the other compounds that can be used to form the polymer block [A].

[Proportional content of aliphatic conjugated diene compound-derived structural unit]

The proportional content of the aliphatic conjugated diene compound-derived structural unit in the block copolymer is preferably 5 mass% or more, and more preferably 10 mass% or more, and is preferably 95 mass% or less, and more preferably 60 mass% or less. This is because the solubility in organic solvents of a hydrogenated block copolymer obtained through hydrogenation of the presently disclosed block copolymer can be further increased when the proportional content of the aliphatic conjugated diene compound-derived structural unit in the block copolymer is not less than any of the lower limits set forth above. Moreover, the mechanical strength of the block copolymer improves when the proportional content of the aliphatic conjugated diene compound-derived structural unit in the block copolymer is not more than any of the upper limits set forth above. Furthermore, the proportional content of the aromatic vinyl compound-derived structural unit in the block copolymer is preferably higher than the proportional content of the aliphatic conjugated diene compound-derived structural unit in the block copolymer from a viewpoint of achieving a balance of both mechanical strength of the block copolymer and improving solubility of a hydrogenated block copolymer in organic solvents.

{1,2-Vinyl bonds and 1,4-vinyl bonds}

The presently disclosed block copolymer includes 1,2-vinyl bonds and 1,4-vinyl bonds originating from the aliphatic conjugated diene compound in the polymer block [B]. Note that a 1,2-vinyl bond originates from 1,2-addition of the aliphatic conjugated diene compound and has a branched structure such as indicated in the following formula (1). A 1,4-vinyl bond originates from 1,4-addition of the aliphatic conjugated diene compound and has a linear structure such as indicated in the following formula (2).

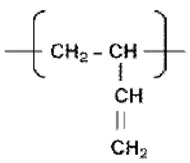
· · · (1)

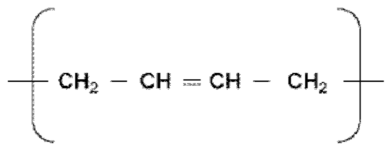
· · · (2)

-Proportional content of 1,2-vinyl bonds and 1,4-vinyl bonds-

The mass ratio of the proportional content of 1,2-vinyl bonds and the proportional content of 1,4-vinyl bonds (1,2-vinyl bonds/1,4-vinyl bonds) in the presently disclosed block copolymer is required to be 5/95 or more, is preferably 30/70 or more, and is required to be 90/10 or less. Through the mass ratio of the proportional content of 1,2-vinyl bonds and the proportional content of 1,4-vinyl bonds (1,2-vinyl bonds/1,4-vinyl bonds) in the block copolymer being 5/95 or more, the presently disclosed block copolymer can serve as a precursor of a hydrogenated block copolymer having excellent solubility in organic solvents.

<Polymer block [C]>

The presently disclosed block copolymer may optionally include a polymer block [C] having a structural unit derived from another compound as a main component. Note that no specific limitations are placed on the polymer block [C] so long as it includes a structural unit other than an aromatic vinyl compound-derived structural unit and an aliphatic conjugated diene compound-derived structural unit.

<Form of block copolymer>

The form of the presently disclosed block copolymer is not specifically limited but a chain-type block form is preferable from a viewpoint of having excellent mechanical strength. Specific examples of forms of the block copolymer include an [A]-[B] diblock copolymer in which a polymer block [A] and a polymer block [B] are bonded, an [A]-[B]-[A] triblock copolymer in which polymer blocks [A] are bonded to both ends of a polymer block [B], and an [A]-[B]-[A]-[B]-[A] pentablock copolymer in which polymer blocks [B] are bonded to both ends of a polymer block [A] and then polymer blocks [A] are further bonded to the other ends of the two polymer blocks [B]. In particular, the presently disclosed block copolymer is preferably an [A]-[B]-[A] triblock copolymer from a viewpoint that the block copolymer can serve as a precursor of a hydrogenated block copolymer having excellent optical properties.

[Ratio of weight fractions]

When the weight fraction constituted by all polymer blocks [A] in the overall block copolymer is taken to be wA and the weight fraction constituted by all polymer blocks [B] in the overall block copolymer is taken to be wB, the ratio of the weight fractions wA and wB (wA:wB) is preferably 5:95 to 95:5, more preferably 5:95 to 80:20, even more preferably 5:95 to 60:40, and particularly preferably 40:60 to 60:40. This is because the block copolymer can be provided as a precursor of a hydrogenated block copolymer having excellent optical properties when the weight fraction ratio is within any of the ranges set forth above. Note that wA and wB are calculated based on the weight of all polymer blocks [A] and the weight of all polymer blocks [B]. Also note that the weight of all polymer blocks [A] and the weight of all polymer blocks [B] can be calculated through $^{1}H$-NMR measurement.

<Number-average molecular weight (Mn)>

The number-average molecular weight of the presently disclosed block copolymer is preferably 10,000 or more, more preferably 20,000 or more, and even more preferably 30,000 or more, and is preferably 400,000 or less, more preferably 200,000 or less, and even more preferably 100,000 or less. This is because a hydrogenated block copolymer

having a high percentage hydrogenation can be efficiently obtained through hydrogenation of the presently disclosed block copolymer when the number-average molecular weight (Mn) of the block copolymer is within any of the ranges set forth above.

<Molecular weight distribution (Mw/Mn)>

The molecular weight distribution (weight-average molecular weight (Mw)/number-average molecular weight (Mn)) of the presently disclosed block copolymer is preferably 3 or less, more preferably 2 or less, and even more preferably 1.5 or less. This is because a hydrogenated block copolymer having a high percentage hydrogenation can be more efficiently obtained through hydrogenation of the presently disclosed block copolymer when the molecular weight distribution (Mw/Mn) of the block copolymer is not more than any of the upper limits set forth above. Note that the weight-average molecular weight (Mw) and the number-average molecular weight (Mn) of a block copolymer can be measured by gel permeation chromatography with tetrahydrofuran as an eluent solvent.

(Production method of block copolymer)

No specific limitations are placed on the method by which the presently disclosed block copolymer is produced. For example, the presently disclosed block copolymer can be obtained by block copolymerizing an aromatic vinyl compound and an aliphatic conjugated diene compound. However, it is preferable that the production method of the presently disclosed block copolymer includes a polymerization step described below.

<Polymerization step>

In the polymerization step included in the presently disclosed method of producing a block copolymer, an aromatic vinyl compound and an aliphatic conjugated diene compound are block copolymerized in the presence of a randomizer. In this block copolymerization, a polycyclic aromatic vinyl compound including at least two monocycles selected from the group consisting of aromatic hydrocarbon monocycles and aromatic heteromonocycles is used as the aromatic vinyl compound. In the presently disclosed method of producing a block copolymer, the block copolymerization may optionally be performed using another compound that is copolymerizable with the aromatic vinyl compound and/or the aliphatic conjugated diene compound as a monomer. Moreover, the polymerization step can, without any specific limitations, be carried out using a polymerization catalyst in an organic solvent under an atmosphere of inert gas such as nitrogen gas.

[Randomizer]

The randomizer used in the polymerization step is a compound that can adjust the ratio of 1,2-vinyl bonds and 1,4-vinyl bonds in the polymer block [B] of the presently disclosed block copolymer.

Examples of randomizers that can be used include ether compounds having a chain structure such as 1,2-dimethoxyethane; ether compounds having a cyclic structure such as tetrahydrofuran; 1,2-dipiperidinoethane; and tetramethylethylenediamine. Of these examples, ether compounds having a chain structure are preferable as the randomizer from a viewpoint that the amount of 1,2-vinyl bonds in the polymer block [B] of the block copolymer can be efficiently increased using a small amount thereof, and 1,2-dimethoxyethane is particularly preferable. Note that one of these randomizers may be used individually, or two or more of these randomizers may be used in combination in a freely selected ratio.

The amount of the randomizer that is used per 1 mol of the polymerization catalyst is preferably 0.01 mol or more, more preferably 0.02 mol or more, and even more preferably 0.1 mol or more, and is preferably 10 mol or less, more preferably 1 mol or less, and even more preferably 0.5 mol or less. This is because the amount of 1,2-vinyl bonds in the obtained block copolymer can be efficiently increased when the used amount of the randomizer is not less than any of the lower limits set forth above. Moreover, the proportion of triblock copolymer that is obtained can be increased when the used amount of the randomizer is not more than any of the upper limits set forth above.

[Aromatic vinyl compound]

It is a requirement that the polycyclic aromatic vinyl compound including at least two monocycles selected from the group consisting of aromatic hydrocarbon monocycles and aromatic heteromonocycles that is in the polymer block [A] of the presently disclosed block copolymer is used as the aromatic vinyl compound in the polymerization step. In addition, a monocyclic aromatic vinyl compound forming a monocyclic aromatic vinyl monomer unit in the presently disclosed block copolymer may optionally be used as the aromatic vinyl compound in the presently disclosed method

of producing a block copolymer. The use of 1-vinylnaphthalene and 2-vinylnaphthalene as the aromatic vinyl compound is preferable from a viewpoint of causing efficient progression of the polymerization reaction.

One aromatic vinyl compound may be used individually in the polymerization step, or two or more aromatic vinyl compounds may be used in combination in a freely selected ratio in the polymerization step. In a case in which a polycyclic aromatic vinyl compound and a monocyclic aromatic vinyl compound are used together as the aromatic vinyl compound, the proportional contents of the polycyclic aromatic vinyl compound and the monocyclic aromatic vinyl compound among the aromatic vinyl compound preferably have a mass ratio (polycyclic aromatic vinyl compound/monocyclic aromatic vinyl compound) of 1:1.

The amount of the aromatic vinyl compound that is used per 100 parts by mass of all polymerized monomers is preferably 5 parts by mass or more, and more preferably 10 parts by mass or more, and is preferably 95 parts by mass or less, and more preferably 90 parts by mass or less. This is because the polymerization reaction can be caused to efficiently progress when the used amount of the aromatic vinyl compound is within any of the ranges set forth above.

[Aliphatic conjugated diene compound]

The aliphatic conjugated diene compound forming the polymer block [B] of the presently disclosed block copolymer is used as the aliphatic conjugated diene compound in the polymerization step. The use of 1,3-butadiene as the aliphatic conjugated diene compound is preferable from a viewpoint of causing efficient progression of the polymerization reaction. Note that one aliphatic conjugated diene compound may be used individually, or two or more aliphatic conjugated diene compounds may be used in combination in a freely selected ratio.

The amount of the aliphatic conjugated diene compound that is used per 100 parts by mass of the total amount of polymerized monomers is normally 5 parts by mass or more, and preferably 10 parts by mass or more, and is normally 95 parts by mass or less, and preferably 60 parts by mass or less. This is because the polymerization reaction can be caused to efficiently progress when the used amount of the aliphatic conjugated diene compound is within any of the ranges set forth above.

[Other compounds]

Examples of other compounds that can be used in the polymerization step include compounds that can be used to form structural units other than an aromatic vinyl compound-derived structural unit and an aliphatic conjugated diene compound-derived structural unit. For example, unsaturated carboxylic acid ester compounds such as methyl acrylate and methyl methacrylate can be used as other compounds. Note that one other compound may be used individually, or two or more other compounds may be used in combination in a freely selected ratio.

[Organic solvent]

Examples of organic solvents that can be used in the polymerization step include, but are not specifically limited to, aliphatic hydrocarbons such as pentane, hexane, and heptane; alicyclic hydrocarbons such as cyclopentane, cyclohexane, methylcyclohexane, dimethylcyclohexane, trimethylcyclohexane, ethylcyclohexane, diethylcyclohexane, decahydronaphthalene, bicycloheptane, tricyclodecane, hexahydroindene, and cyclooctane; aromatic hydrocarbons such as benzene, toluene, and xylene; halogenated aliphatic hydrocarbons such as dichloromethane, chloroform, and 1,2-dichloroethane; halogenated aromatic hydrocarbons such as chlorobenzene and dichlorobenzene; nitrogen-containing hydrocarbon solvents such as nitromethane, nitrobenzene, and acetonitrile; and mixed solvents of any of the preceding examples. Of these examples, toluene is preferably used as the organic solvent from a viewpoint of causing efficient progression of the polymerization reaction. Note that one of these organic solvents may be used individually, or two or more of these organic solvents may be used in combination in a freely selected ratio.

The amount of the organic solvent that is used per 100 parts by mass of the total amount of polymerized monomers is normally 20 parts by mass or more, and preferably 100 parts by mass or more, and is normally 50,000 parts by mass or less, and preferably 20,000 parts by mass or less. This is because it is possible to prevent control of the copolymerization reaction becoming difficult due to viscosity change accompanying progress of polymerization when the used amount of the organic solvent is not less than any of the lower limits set forth above. Moreover, the block copolymer can be more easily collected from the organic solvent when the used amount of the organic solvent is not more than any of the upper limits set forth above.

[Polymerization catalyst]

The polymerization catalyst used in the polymerization step is not specifically limited and may, for example, be an alkyllithium compound in which the carbon number of the alkyl group is 1 to 10, specific examples of which include

methyllithium, ethyllithium, pentyllithium, n-butyllithium, sec-butyllithium, and t-butyllithium. Of these examples, n-butyllithium is preferably used as the polymerization catalyst from a viewpoint of causing efficient progression of the polymerization reaction. The amount of the polymerization catalyst that is used can be adjusted as appropriate depending on the target molecular weight of the block copolymer.

Commonly known methods of producing block copolymers can be adopted without any specific limitations as the method by which the aromatic vinyl compound and the aliphatic conjugated diene compound are block copolymerized. Examples of methods that can be adopted in a case in which an [A]-[B]-[A] triblock copolymer is to be produced include:

(i) a method including a first polymerization step of polymerizing a monomer mixture (a1) containing the aromatic vinyl compound to form a polymer block [A], a second polymerization step of polymerizing a monomer mixture (b1) containing the aliphatic conjugated diene compound to form a polymer block [B], and a third polymerization step of polymerizing a monomer mixture (a2) containing the aromatic vinyl compound to form a polymer block [A]; and
(ii) a method including a first polymerization step of polymerizing a monomer mixture (a1) containing the aromatic vinyl compound to form a polymer block [A], a second polymerization step of polymerizing a monomer mixture (b1) containing the aliphatic conjugated diene compound to form a polymer block [B’], and a step of coupling ends of polymer blocks [B’] through a coupling agent.

Note that commonly known coupling agents can be used without any specific limitations as the coupling agent used in method (ii). The amount of the coupling agent that is used can be adjusted as appropriate depending on the target molecular weight of the block copolymer.

The polymerization temperature is not specifically limited and can be set as not lower than 20°C and not higher than 150°C, and preferably not lower than 25°C and not higher than 120°C, for example. This is because the polymerization catalyst can sufficiently function when the polymerization temperature is not lower than any of the lower limits set forth above. Moreover, decomposition of the polymerization catalyst can be inhibited when the polymerization temperature is not higher than any of the upper limits set forth above.

The polymerization time is not specifically limited and can be set as not less than 1 hour and not more than 10 hours, and preferably not less than 2 hours and not more than 8 hours, for example. This is because the polymerization reaction can be caused to sufficiently progress when the polymerization time is not less than any of the lower limits set forth above. Moreover, the time required for production of the block copolymer can be reduced when the polymerization time is not more than any of the upper limits set forth above.

No specific limitations are placed on the method by which the resultant block copolymer is collected once the polymerization step has ended. For example, the block copolymer can be collected as obtained in the form of a polymerization solution. Note that the reaction mixture obtained through the polymerization step normally contains a block copolymer such as a diblock copolymer and/or a triblock copolymer, a randomizer, and an organic solvent.

[Purity of triblock copolymer]

When the proportion constituted by a triblock copolymer among all polymer obtained through the polymerization step is taken to be the purity of the triblock copolymer, the purity of the triblock copolymer is preferably 60% or more, more preferably 70% or more, and even more preferably 80% or more. This is because the reaction mixture obtained after the polymerization step can be used in the state in which it is obtained for producing the presently disclosed polymer composition in a case in which the purity of the triblock copolymer is 60% or more.

The block copolymer obtained through the polymerization step may, for example, be a triblock copolymer indicated by the following formula (3).

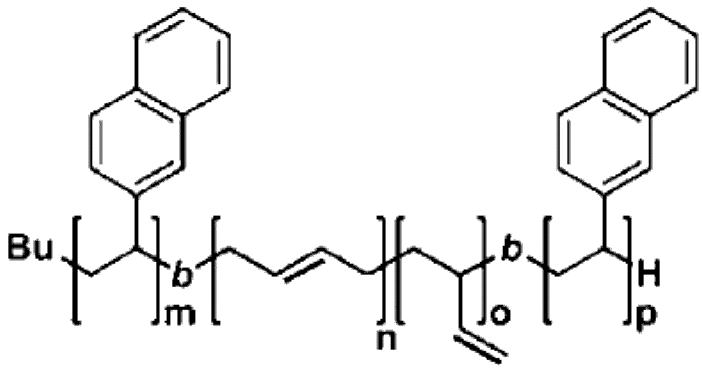

・・・(3)

In formula (3), Bu indicates a butyl group, b indicates a block structure, and m, n, o, and p each indicate a number of repetitions.

The block copolymer obtained through the polymerization step may be used as obtained for various materials or may be used for various materials after being converted to a hydrogenated block copolymer through hydrogenation thereof. The following describes the presently disclosed hydrogenated block copolymer.

(Hydrogenated block copolymer)

The presently disclosed hydrogenated block copolymer is obtained through hydrogenation of the presently disclosed block copolymer and, more specifically, is obtained through hydrogenation of carbon-carbon unsaturated double bonds in the polymer block [B]. Note that the method of hydrogenation is described further below.

<Percentage hydrogenation>

The percentage hydrogenation of the hydrogenated block copolymer is normally 90% or more, preferably 95% or more, and more preferably 98% or more. This is because resistance to oxidation of the hydrogenated block copolymer improves when the percentage hydrogenation of the hydrogenated block copolymer is higher. Note that the percentage hydrogenation of a hydrogenated block copolymer can be determined through $^{1}H$-NMR measurement.

<Number-average molecular weight (Mn)>

The number-average molecular weight (Mn) of the hydrogenated block copolymer is preferably 40,000 or more, and more preferably 50,000 or more, and is preferably 300,000 or less, and more preferably 200,000 or less. This is because mechanical strength of the hydrogenated block copolymer improves when the number-average molecular weight (Mn) of the hydrogenated block copolymer is not less than any of the lower limits set forth above. Moreover, shaping processability of the hydrogenated block copolymer is better when the number-average molecular weight (Mn) of the hydrogenated block copolymer is not more than any of the upper limits set forth above.

<Molecular weight distribution (Mw)/(Mn)>

The molecular weight distribution (weight-average molecular weight (Mw)/number-average molecular weight (Mn)) of the hydrogenated block copolymer is preferably 3 or less, more preferably 2 or less, and even more preferably 1.5 or less. This is because mechanical strength of the hydrogenated block copolymer further improves when the molecular weight distribution of the hydrogenated block copolymer is not more than any of the upper limits set forth above. Note that the weight-average molecular weight (Mw) and the number-average molecular weight (Mn) of a hydrogenated block copolymer can be measured by gel permeation chromatography with tetrahydrofuran as an eluent solvent.

The presently disclosed hydrogenated block copolymer that is obtained through hydrogenation as described above has excellent solubility in organic solvents. Although it is not clear why the presently disclosed hydrogenated block copolymer displays high solubility in organic solvents, it is presumed that reduction of crystalline sections of the block copolymer serving as the precursor of the hydrogenated block copolymer as a result of the presence of a branched structure of 1,2-vinyl bonds in the block copolymer contributes to the high solubility of the hydrogenated block copolymer in organic solvents.

<Production method of hydrogenated block copolymer>

The presently disclosed hydrogenated block copolymer can be obtained through hydrogenation of the presently disclosed block copolymer. The method, form of reaction, and so forth by which hydrogenation of carbon-carbon unsaturated double bonds in the polymer block [B] of the block copolymer is performed through the hydrogenation may be in accordance with any commonly known method. However, hydrogenation methods that enable a high percentage hydrogenation with little occurrence of polymer chain scission reactions are preferable. Examples of such hydrogenation methods that can be adopted include those described in JP-S59-133203A, JP-H1-275605A, JP-H5-222115A, and JP-H7-90017A, for example. Note that the hydrogenation of the block copolymer can normally be performed with the block copolymer dissolved in an organic solvent in the presence of a hydrogenation catalyst.

Catalysts that are typically used in hydrogenation reactions can be used as the hydrogenation catalyst, and specific examples thereof include transition metal catalysts such as nickel, palladium, and platinum. Moreover, p-toluenesulfonyl hydrazide can be used as a hydrogenation reagent.

Furthermore, organic solvents used in conventional hydrogenation reactions can be used as the organic solvent. In particular, it is preferable to use the same type of organic solvent as is used in production of the presently disclosed block copolymer.

The temperature at which hydrogenation is performed is normally 60°C or higher, preferably 80°C or higher, and more preferably 100°C or higher. This is because the hydrogenation reaction efficiently progresses when the temperature at which hydrogenation is performed is not lower than any of the lower limits set forth above.

The pressure at which hydrogenation is performed is typically normal pressure or higher. This is because the block copolymer can be sufficiently hydrogenated through the hydrogenation reaction when hydrogenation is performed at normal pressure.

The time for which hydrogenation is performed is preferably 1 hour or more, and is preferably 24 hours or less. This is because the hydrogenation reaction can be caused to sufficiently progress when the hydrogenation time is within the range set forth above.

In a hydrogenation reaction in which the presently disclosed block copolymer is used as a precursor, the hydrogenated block copolymer is obtained in a dissolved state in the organic solvent as the hydrogenation reaction progresses. As a result of the presently disclosed hydrogenated block copolymer having excellent solubility in organic solvents as previously described, the hydrogenated block copolymer does not precipitate from the organic solvent even in a situation in which the organic solvent is left to cool to room temperature (25°C) after the hydrogenation reaction ends. Therefore, according to the present disclosure, it is possible to obtain a hydrogenated block copolymer that is easy to handle in a production process.

Note that the hydrogenated block copolymer that is dissolved in the organic solvent after the hydrogenation reaction ends can be collected by, for example, adding the polymerization solution into a poor solvent such as acetone or methanol to cause coagulation of the hydrogenated block copolymer, and then separating the hydrogenated block copolymer that has coagulated using a means of solid-liquid separation such as filtration.

The hydrogenated block copolymer that has been collected may be used in that form as a shaping material or may be used in the form of a polymer composition that contains the hydrogenated block copolymer. The following describes the presently disclosed polymer composition.

(Polymer composition)

The presently disclosed polymer composition contains the presently disclosed hydrogenated block copolymer and can optionally further contain a randomizer, an organic solvent, and other components. The presently disclosed polymer composition can suitably be used for shaping the presently disclosed shaped product, for example.

The hydrogenated block copolymer in the polymer composition is not specifically limited so long as it is obtained through hydrogenation of the presently disclosed block copolymer.

Moreover, the content of the hydrogenated block copolymer in the polymer composition is preferably 1 mass% or more. This is because a shaped product can be efficiently produced using the presently disclosed polymer composition when the content of the hydrogenated block copolymer is not less than the lower limit set forth above.

The randomizer in the polymer composition may be any of the previously described randomizers.

The organic solvent in the polymer composition is not specifically limited and may be the organic solvent that was used in production of the presently disclosed block copolymer and/or hydrogenated block copolymer, for example.

The content of the organic solvent in the polymer composition is preferably 30 parts by mass or less per 100 parts by mass of the hydrogenated block copolymer. This is because removal of residual organic solvent after shaping of a shaped product using the presently disclosed polymer composition is easy when the content of the organic solvent is not more than the upper limit set forth above.

Examples of other components that can optionally be contained in the polymer composition include, but are

not specifically limited to, a polymerization catalyst, hydrogenation catalyst, or the like used in production of the presently disclosed block copolymer and/or hydrogenated block copolymer.

The content of other components in the polymer composition is preferably 1 part by mass or less per 100 parts by mass of the hydrogenated block copolymer. This is because removal of other components that are not necessary for shaping can easily be performed prior to shaping of a shaped product using the presently disclosed polymer composition when the content of other components is not more than the upper limit set forth above.

No specific limitations are placed on the method by which the presently disclosed polymer composition is produced. For example, the presently disclosed polymer composition can be obtained by mixing the components described above by a commonly known method. Moreover, a reaction mixture obtained when the presently disclosed block copolymer is hydrogenated may be used as the presently disclosed polymer composition.

(Shaped product)

The presently disclosed shaped product is a product that is obtained through shaping of the presently disclosed polymer composition. No specific limitations are placed on the method by which the presently disclosed polymer composition is shaped. For example, the shaped product can be obtained by subjecting the presently disclosed polymer composition to shaping processing such as injection molding, extrusion molding, casting, inflation molding, blow molding, vacuum forming, press forming compression molding, rotational molding, calendering, rolling, or machining. The presently disclosed shaped product can suitably be used as an optical component such as an optical film, for example.

## EXAMPLES

The following provides a more specific description of the present disclosure based on examples. However, the present disclosure is not limited to the following examples. In the following description, "%" and "parts" used in expressing quantities are by mass, unless otherwise specified. Measurement methods of various physical properties are described below.

<Number-average molecular weight (Mn), weight-average molecular weight (Mw), and molecular weight distribution (Mw/Mn)>

Gel permeation chromatography (GPC) was used to measure the number-average molecular weight (Mn) and weight-average molecular weight (Mw) and to calculate the molecular weight distribution (Mw/Mn) for each polymer, diblock copolymer, and triblock copolymer. Note that in the case of a polymer or diblock copolymer, the number-average molecular weight and weight-average molecular weight were calculated through GPC measurement performed in a state with the polymer or diblock copolymer contained in a reaction mixture obtained partway through a reaction.

This measurement was performed using an HLC-8320 (produced by Tosoh Corporation) as a measurement instrument. Moreover, two TSKgel $\alpha$-M columns (produced by Tosoh Corporation) connected in series were used as a column. A differential refractometer RI-8320 (produced by Tosoh Corporation) was used as a detector. Furthermore, the number-average molecular weight (Mn) and weight-average molecular weight (Mw) of each polymer, diblock copolymer, or triblock copolymer were determined as standard polystyrene-equivalent values using tetrahydrofuran as an eluent solvent. The molecular weight distribution (Mw/Mn) was calculated from the determined values.

<Conversion rates>

The conversion rate of 2-vinylnaphthalene and the conversion rate of 1,3-butadiene were calculated through $^1$H-NMR measurement with deuterated chloroform as a solvent.

<Proportional content of 1,2-vinyl bonds and proportional content of 1,4-vinyl bonds>

$^1$H-NMR measurement of an obtained diblock copolymer was performed with deuterated chloroform as a solvent. The proportional content of 1,2-vinyl bonds and the proportional content of 1,4-vinyl bonds in the diblock copolymer were calculated from an integration value for a peak attributed to double bonds of poly(1,2-butadiene) and an integration value for a peak attributed to double bonds of poly(1,4-butadiene). A ratio (mass ratio) of the proportional content of 1,2-vinyl bonds and the proportional content of 1,4-vinyl bonds was calculated.

<Purity of triblock copolymer>

The purity of a triblock copolymer was calculated based on the following formula.

$$\text{Purity of triblock copolymer (\%)} = [\text{Mass of isolated triblock copolymer (g)}/\text{Mass of all polymer contained in reaction mixture (g)}] \times 100$$

Note that the mass of each polymer contained in the reaction mixture was calculated based on an area ratio according to gel permeation chromatography (GPC).

<Percentage hydrogenation>

The percentage hydrogenation of a hydrogenated triblock copolymer was calculated through $^1$H-NMR measurement.

<Weight ratio of polymer blocks>

The weight ratio of polymer blocks was calculated through $^1$H-NMR measurement.

<Evaluation of solubility>

After adding 3 g of toluene to 1 g of a hydrogenated triblock copolymer, stirring thereof was performed at 25°C, and the time taken for the hydrogenated triblock copolymer to completely dissolve was measured. Solubility was evaluated as follows based on the measurement result.

A: Completely dissolved after 1 hour of stirring
B: Completely dissolved after 2 hours of stirring
C: Not dissolved even after 2 hours of stirring

[Example 1]

(Production of block copolymer)

{First polymerization step}

Under a nitrogen atmosphere, a pressure-resistant reactor that had been dried and purged with nitrogen was charged with 20 mL of toluene as an organic solvent, 101 μL (162 μmol) of a 1.6 M hexane solution of n-butyllithium as a polymerization catalyst, and 8.8 μL (40.6 μmol; 0.25 mol per 1 mol of polymerization catalyst) of 1,2-dipiperidinoethane (hereinafter, abbreviated as "DPE") as a randomizer. Thereafter, 8 g of a 25% toluene solution of 2-vinylnaphthalene as an aromatic vinyl compound was added into the pressure-resistant reactor and was caused to react at 25°C for 1 hour to carry out a first stage polymerization reaction and obtain a polymer. The obtained polymer had a number-average molecular weight (Mn) of 14,500, a weight-average molecular weight (Mw) of 15,700, and a molecular weight distribution (Mw/Mn) of 1.08. The conversion rate of 2-vinylnaphthalene was 96%.

{Second polymerization step}

Once the first stage polymerization reaction had ended, 8 g of a 25% toluene solution of 1,3-butadiene as a chain conjugated diene compound was subsequently added to the reaction mixture in the pressure-resistant reactor and was caused to react at 50°C for 1 hour to carry out a second stage polymerization reaction. This yielded a diblock copolymer having a [2-vinylnaphthalene block]-[1,3-butadiene block] block configuration in the reaction mixture. The obtained diblock copolymer had a number-average molecular weight (Mn) of 31,300, a weight-average molecular weight (Mw) of 34,000, and a molecular weight distribution (Mw/Mn) of 1.08. It was confirmed by $^1$H-NMR measurement that all 2-vinylnaphthalene remaining after the first stage polymerization reaction had been consumed. The conversion rate of 1,3-butadiene was 96%. Moreover, the proportional content of 1,2-vinyl bonds in the obtained diblock copolymer was 44 mass% and the proportional content of 1,4-vinyl bonds in the obtained diblock copolymer was 56 mass%.

{Third polymerization step}

Next, 8 g of a 25% toluene solution of 2-vinylnaphthalene as an aromatic vinyl compound was added to the reaction mixture and was caused to react at 50°C for 1.5 hours to carry out a third stage polymerization reaction. Once

the polymerization reaction was complete, 50 μL of methanol was added to stop the polymerization reaction. This yielded a triblock copolymer having a [2-vinylnaphthalene block]-[1,3-butadiene block]-[2-vinylnaphthalene block] block configuration in the reaction mixture. The obtained triblock copolymer had a number-average molecular weight (Mn) of 45,100, a weight-average molecular weight (Mw) of 50,400, and a molecular weight distribution (Mw/Mn) of 1.11. Moreover, the purity of the obtained triblock copolymer was 65%. It was confirmed by $^1$H-NMR measurement that the reaction mixture contained 20% of the diblock copolymer having a [2-vinylnaphthalene block]-[1,3-butadiene block] block configuration, 2% of poly(2-vinylnaphthalene), and 12% of a coupling product of the triblock copolymer having a [2-vinylnaphthalene block]-[1,3-butadiene block]-[2-vinylnaphthalene block] block configuration. It was also confirmed by $^1$H-NMR measurement that all 1,3-butadiene remaining after the second stage polymerization reaction and all 2-vinylnaphthalene added in the third stage polymerization reaction had been consumed.

(Production of hydrogenated block copolymer)

After concentrating the triblock copolymer obtained as described above and removing toluene, the triblock copolymer was dissolved in 300 mL of p-xylene to obtain a triblock copolymer solution. Next, 34 g of p-toluenesulfonyl hydrazide was added to the obtained triblock copolymer solution, and oxygen in the triblock copolymer solution was removed through multiple repetitions of pressure reduction and nitrogen purging operations. Thereafter, a reaction was carried out at a temperature of 120°C for 6 hours to hydrogenate carbon-carbon unsaturated double bonds in butadiene blocks of the triblock copolymer. Once this hydrogenation was complete, large amounts of acetone and methanol were poured into the reaction solution to obtain a hydrogenated block copolymer as 6 g of a lumpy product. The weight ratio of 2-vinylnaphthalene units and hydrogenated 1,3-butadiene units (2-vinylnaphthalene units:hydrogenated butadiene units) in the obtained hydrogenated block copolymer was 2:1. Thus, the [2-vinylnaphthalene block] weight fraction in the obtained hydrogenated triblock copolymer was 66.7% and the [hydrogenated 1,3-butadiene block] weight fraction in the obtained hydrogenated triblock copolymer was 33.3%. Moreover, the percentage hydrogenation of the obtained hydrogenated triblock copolymer exceeded 99%. Furthermore, when solubility of the obtained hydrogenated triblock copolymer was investigated, the hydrogenated triblock copolymer was confirmed to completely dissolve in toluene after 1 hour of stirring.

[Example 2]

With the exception that the amount of DPE used as a randomizer in the first stage polymerization reaction was changed to 4.4 μL (20.3 μmol; 0.125 mol per 1 mol of polymerization catalyst), the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 46,100, a weight-average molecular weight (Mw) of 53,700, and a molecular weight distribution (Mw/Mn) of 1.16. Moreover, the purity of the obtained triblock copolymer was 80%. The proportional content of 1,2-vinyl bonds in the obtained triblock copolymer was 26% and the proportional content of 1,4-vinyl bonds in the obtained triblock copolymer was 74%. Furthermore, when solubility of the obtained hydrogenated triblock copolymer was investigated, the hydrogenated triblock copolymer was confirmed to completely dissolve in toluene after 2 hours of stirring.

[Example 3]

With the exception that DPE used as a randomizer in the first stage polymerization reaction was changed to 6 μL (40.6 μmol; 0.25 mol per 1 mol of polymerization catalyst) of tetramethylethylenediamine (hereinafter, abbreviated as "TMEDA"), the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 38,600, a weight-average molecular weight (Mw) of 43,900, and a molecular weight distribution (Mw/Mn) of 1.13. Moreover, the purity of the obtained triblock copolymer was 71%. The proportional content of 1,2-vinyl bonds in the obtained triblock copolymer was 51% and the proportional content of 1,4-vinyl bonds in the obtained triblock copolymer was 49%. Furthermore, when solubility of the obtained hydrogenated triblock copolymer was investigated, the hydrogenated triblock copolymer was confirmed to completely dissolve in toluene after 1 hour of stirring.

[Example 4]

With the exception that DPE used as a randomizer in the first stage polymerization reaction was changed to 3

μL (20.3 μmol; 0.125 mol per 1 mol of polymerization catalyst) of TMEDA, the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 39,600, a weight-average molecular weight (Mw) of 45,400, and a molecular weight distribution (Mw/Mn) of 1.14. Moreover, the purity of the obtained triblock copolymer was 80%. The proportional content of 1,2-vinyl bonds in the obtained triblock copolymer was 33% and the proportional content of 1,4-vinyl bonds in the obtained triblock copolymer was 67%. Furthermore, when solubility of the obtained hydrogenated triblock copolymer was investigated, the hydrogenated triblock copolymer was confirmed to completely dissolve in toluene after 1 hour of stirring.

[Example 5]

With the exception that DPE used as a randomizer in the first stage polymerization reaction was changed to 4.3 μL (40.6 μmol; 0.25 mol per 1 mol of polymerization catalyst) of 1,2-dimethoxyethane (hereinafter, abbreviated as "DME"), the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 41,000, a weight-average molecular weight (Mw) of 46,000, and a molecular weight distribution (Mw/Mn) of 1.12. Moreover, the purity of the obtained triblock copolymer was 70%. The proportional content of 1,2-vinyl bonds in the obtained triblock copolymer was 57% and the proportional content of 1,4-vinyl bonds in the obtained triblock copolymer was 43%. Furthermore, when solubility of the obtained hydrogenated triblock copolymer was investigated, the hydrogenated triblock copolymer was confirmed to completely dissolve in toluene after 1 hour of stirring.

[Example 6]

With the exception that DPE used in the first stage polymerization reaction was changed to 2.1 μL (20.3 μmol; 0.125 mol per 1 mol of polymerization catalyst) of DME, the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 41,600, a weight-average molecular weight (Mw) of 48,200, and a molecular weight distribution (Mw/Mn) of 1.15. Moreover, the purity of the obtained triblock copolymer was 79%. The proportional content of 1,2-vinyl bonds in the obtained triblock copolymer was 38% and the proportional content of 1,4-vinyl bonds in the obtained triblock copolymer was 62%. Furthermore, when solubility of the obtained hydrogenated triblock copolymer was investigated, the hydrogenated triblock copolymer was confirmed to completely dissolve in toluene after 1 hour of stirring.

[Example 7]

The mass ratio of monomers used in the polymerization reaction was changed to 2-vinylnaphthalene:1,3-butadiene:2-vinylnaphthalene = 2:1:2. Moreover, DPE used as a randomizer in the first stage polymerization reaction was changed to 2.1 μL (20.3 μmol; 0.125 mol per 1 mol of polymerization catalyst) of DME. With the exception of these points, the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 41,700, a weight-average molecular weight (Mw) of 47,100, and a molecular weight distribution (Mw/Mn) of 1.12. Moreover, the purity of the triblock copolymer was 68%. The proportional content of 1,2-vinyl bonds in the obtained triblock copolymer was 42% and the proportional content of 1,4-vinyl bonds in the obtained triblock copolymer was 58%. Furthermore, when solubility of the obtained hydrogenated triblock copolymer was investigated, the hydrogenated triblock copolymer was confirmed to completely dissolve in toluene after 1 hour of stirring.

[Example 8]

The mass ratio of monomers used in the polymerization reaction was changed to 2-vinylnaphthalene:1,3-butadiene:2-vinylnaphthalene = 1:2:1. Moreover, DPE used in the first stage polymerization reaction was changed to 2.1 μL (20.3 μmol; 0.125 mol per 1 mol of polymerization catalyst) of DME. With the exception of these points, the polymerization reaction was carried out under the same conditions as in Example 1 to obtain a triblock copolymer having

a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 45,800, a weight-average molecular weight (Mw) of 51,700, and a molecular weight distribution (Mw/Mn) of 1.12. Moreover, the purity of the obtained triblock copolymer was 68%. The proportional content of 1,2-vinyl bonds in the obtained triblock copolymer was 41% and the proportional content of 1,4-vinyl bonds in the obtained triblock copolymer was 59%. Furthermore, when solubility of the obtained hydrogenated block copolymer was investigated, the hydrogenated triblock copolymer was confirmed to completely dissolve in toluene after 1 hour of stirring.

[Example 9]

Monomers used in the first stage polymerization reaction and the third stage polymerization reaction were changed to a 1:1 mixture of 2-vinylnaphthalene and styrene. Moreover, DPE used in the first stage polymerization reaction was changed to 2.1 μL (20.3 μmol; 0.125 mol per 1 mol of polymerization catalyst) of 1,2-dimethoxyethane (DME). With the exception of these points, the polymerization reaction was carried out under the same conditions as in Example 1 to obtain a triblock copolymer having a [2-vinylnaphthalene and styrene block]-[1,3-butadiene block]-[2-vinylnaphthalene and styrene block] block configuration and a hydrogenated triblock copolymer obtained through hydrogenation of the triblock copolymer. The obtained triblock copolymer had a number-average molecular weight (Mn) of 36,500, a weight-average molecular weight (Mw) of 41,600, and a molecular weight distribution (Mw/Mn) of 1.13. Moreover, the purity of the obtained triblock copolymer was 81%. The proportional content of 1,2-vinyl bonds in the obtained triblock copolymer was 40% and the proportional content of 1,4-vinyl bonds in the obtained triblock copolymer was 60%. Furthermore, when solubility of the obtained hydrogenated triblock copolymer was investigated, the hydrogenated triblock copolymer was confirmed to completely dissolve in toluene after 1 hour of stirring.

[Example 10]

The amount of n-butyllithium used in the polymerization reaction was changed to 74 μL (118 μmol). Moreover, DPE used in the first stage polymerization reaction was changed to 1.2 μL (20.3 μmol; 0.125 mol per 1 mol of polymerization catalyst) of DME. With the exception of these points, the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 76,800, a weight-average molecular weight (Mw) of 92,100, and a molecular weight distribution (Mw/Mn) of 1.19. Moreover, the purity of the obtained triblock copolymer was 71%. The proportional content of 1,2-vinyl bonds in the obtained triblock copolymer was 46% and the proportional content of 1,4-vinyl bonds in the obtained triblock copolymer was 54%. Furthermore, when solubility of the obtained hydrogenated triblock copolymer was investigated, the hydrogenated triblock copolymer was confirmed to completely dissolve in toluene after 1 hour of stirring.

[Comparative Example 1]

With the exception that the polymerization reaction was performed without adding DPE as a randomizer, the polymerization reaction was carried out under the same conditions as in Example 1 to obtain a triblock copolymer having a [2-vinylnaphthalene block]-[1,3-butadiene block]-[2-vinylnaphthalene block] block configuration and a hydrogenated triblock copolymer obtained through hydrogenation of the triblock copolymer. The obtained triblock copolymer had a number-average molecular weight (Mn) of 41,200, a weight-average molecular weight (Mw) of 47,000, and a molecular weight distribution (Mw/Mn) of 1.14. Moreover, the purity of the obtained triblock copolymer was 80%. The proportional content of 1,2-vinyl bonds in the obtained triblock copolymer was 4% and the proportional content of 1,4-vinyl bonds in the obtained triblock copolymer was 96%. Furthermore, when solubility of the obtained hydrogenated triblock copolymer was investigated, the hydrogenated triblock copolymer was confirmed to just swell without dissolving at all in toluene even after 2 hours of stirring.

[Comparative Example 2]

Monomers used in the first stage polymerization reaction and the third stage polymerization reaction were changed to a 1:1 mixture of 2-vinylnaphthalene and styrene. Moreover, the polymerization reaction was performed without adding DPE as a randomizer in the first stage polymerization reaction. With the exception of these points, the polymerization reaction was carried out under the same conditions as in Example 1 to obtain a triblock copolymer having a [2-vinylnaphthalene and styrene copolymer block]-[1,3-butadiene block]-[2-vinylnaphthalene and styrene copolymer

block] block configuration and a hydrogenated triblock copolymer obtained through hydrogenation of the triblock copolymer. The obtained triblock copolymer had a number-average molecular weight (Mn) of 38,200, a weight-average molecular weight (Mw) of 42,000, and a molecular weight distribution (Mw/Mn) of 1.09. Moreover, the purity of the obtained triblock copolymer was 82%. The proportional content of 1,2-vinyl bonds in the obtained triblock copolymer was 4% and the proportional content of 1,4-vinyl bonds in the obtained triblock copolymer was 96%. Furthermore, when solubility of the obtained hydrogenated triblock copolymer was investigated, the hydrogenated triblock copolymer was confirmed to just swell without dissolving at all in toluene even after 2 hours of stirring.

Results of the examples and comparative examples are shown in the table.

In the table:

[VN] indicates [2-vinylnaphthalene block];
[BD] indicates [1,3-butadiene block]; and
[VN & St] indicates [2-vinylnaphthalene and styrene block].

Moreover, VN indicates 2-vinylnaphthalene and BD indicates 1,3-butadiene.

Furthermore, DPE indicates 1,2-dipiperidinoethane, TMEDA indicates tetramethylethylenediamine, and DME indicates 1,2-dimethoxyethane.

Table 1

| | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|
| Block configuration of copolymer | [VN]-[BD]-[VN] | [VN]-[BD]-[VN] | [VN]-[BD]-[VN] | [VN]-[BD]-[VN] | [VN]-[BD]-[VN] | [VN]-[BD]-[VN] | [VN]-[BD]-[VN] | [VN]-[BD]-[VN] | [VN & St]-[BD]-[VN & Stl | [VN]-[BD]-[VN] | [VN]-[BD]-[VN] | [VN & St]-[BD]-[VN & Stl |
| Mass ratio of monomers | VN:BD:VN = 2:2:2 | VN:BD:VN = 2:22 | VNBD:VN = 2:2:2 | VN:BD:VN = 2:2:2 | VN:BD:VN =2:2:2 | VNBD:VN = 2:2:2 | VN:BD:VN = 2:1:2 | VNBD:VN = 1:2:1 | VN & St: BD: VN & St = 1:1:1 | VN:BD:VN = 22:2 | VN:BD:VN = 2:2:2 | VN & St: BD: VN & St =2:2:2 |
| Randomizer | DPE | DPE | TMEDA | TMEDA | DME | DME | DME | DME | DME | DME | - | - |
| Additive amount of randomizer (mol per 1 mol of polymerization catalyst) | 0.25 | 0.125 | 0.25 | 0.125 | 0.25 | 0.125 | 0.125 | 0.125 | 0.125 | 0.125 | - | - |
| Number-average molecular weight (Mn) | 45100 | 46100 | 38600 | 39600 | 41000 | 41600 | 41700 | 45800 | 36500 | 76800 | 41200 | 38200 |
| Weight-average molecular weight (Mw) | 50400 | 53700 | 43900 | 45400 | 46000 | 48200 | 47100 | 51700 | 41600 | 92100 | 47000 | 42000 |
| Molecular weight distribution (Mw/Mn) | 1.11 | 1.16 | 1.13 | 1.14 | 1.12 | 1.15 | 1.12 | 1.12 | 1.13 | 1.19 | 1.14 | 1.09 |
| 1,2-Vinyl bonds/ 1,4-vinyl bonds (mass ratio) | 44/56 | 26/74 | 51/49 | 33/67 | 57/43 | 38/62 | 42/58 | 41/59 | 40/60 | 46/54 | 4/96 | 4/96 |

(continued)

| | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|
| Purity of triblock copolymer (%) | 65 | 80 | 71 | 80 | 70 | 79 | 68 | 68 | 81 | 71 | 80 | 82 |
| Evaluation of solubility | A | B | A | A | A | A | A | A | A | A | C | C |

It was confirmed from the results in Table 1 that in Examples 1 to 10 in which a polymerization reaction was carried out in the presence of a randomizer, the obtained hydrogenated block copolymers displayed high solubility in toluene. In contrast, it was confirmed that in Comparative Example 1 and Comparative Example 2 in which a polymerization reaction was carried out in the absence of a randomizer, the obtained hydrogenated block copolymers were insoluble in toluene.

INDUSTRIAL APPLICABILITY

According to the present disclosure, it is possible to provide a block copolymer that can serve as a precursor of a hydrogenated block copolymer that is easy to handle after a hydrogenation reaction.

## Claims

1. A block copolymer comprising: a polymer block [A] having an aromatic vinyl compound-derived structural unit as a main component; and a polymer block [B] having an aliphatic conjugated diene compound-derived structural unit as a main component, wherein
the polymer block [A] includes a polycyclic aromatic vinyl monomer unit including at least two monocycles selected from the group consisting of aromatic hydrocarbon monocycles and aromatic heteromonocycles, and
a mass ratio of proportional content of 1,2-vinyl bonds and proportional content of 1,4-vinyl bonds in the block copolymer, in terms of 1,2-vinyl bonds/1,4-vinyl bonds, is not less than 5/95 and not more than 90/10.

2. The block copolymer according to claim 1, wherein proportional content of the aromatic vinyl compound-derived structural unit in the block copolymer is not less than 5 mass% and not more than 95 mass%.

3. The block copolymer according to claim 1 or 2, wherein proportional content of the aliphatic conjugated diene compound-derived structural unit in the block copolymer is not less than 5 mass% and not more than 95 mass%.

4. A hydrogenated block copolymer obtained through hydrogenation of the block copolymer according to any one of claims 1 to 3.

5. A polymer composition comprising the hydrogenated block copolymer according to claim 4.

6. A shaped product obtained through shaping of the polymer composition according to claim 5.

7. A method of producing a block copolymer that is a method of producing the block copolymer according to any one of claims 1 to 3, comprising a polymerization step of block copolymerizing an aromatic vinyl compound and an aliphatic conjugated diene compound in the presence of a randomizer, wherein
the aromatic vinyl compound includes a polycyclic aromatic vinyl compound including at least two monocycles selected from the group consisting of aromatic hydrocarbon monocycles and aromatic heteromonocycles.

8. The method of producing a block copolymer according to claim 7, wherein the randomizer is used in an amount of not less than 0.01 mol and not more than 10 mol per 1 mol of a polymerization catalyst.

**INTERNATIONAL SEARCH REPORT**

International application No. PCT/JP2019/022970

A. CLASSIFICATION OF SUBJECT MATTER
Int.Cl. C08F297/04(2006.01)i, C08F8/04(2006.01)i

According to International Patent Classification (IPC) or to both national classification and IPC

B. FIELDS SEARCHED

Minimum documentation searched (classification system followed by classification symbols)
Int.Cl. C08F297/04, C08F8/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 63-77913 A (THE GOODYEAR TIRE AND RUBBER COMPANY) 08 April 1988, claims, examples & EP 261069 A2, claims, examples | 1-3, 7, 8<br>4-6 |
| Y | JP 2006-111650 A (TOSOH CORPORATION) 27 April 2006, claims, paragraph [0025] (Family: none) | 1-8 |
| Y | JP 2-175705 A (JAPAN SYNTHETIC RUBBER CO., LTD.) 09 July 1990, page 4, lower left column, lines 14-20 (Family: none) | 1-8 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21.08.2019 | 03.09.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2019/022970

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-278844 A (ZEON CORPORATION) 28 October 1997, examples (Family: none) | 1-8 |
| A | JP 10-218953 A (NIPPON ELASTOMER KK) 18 August 1998, entire text, all drawings & US 6306976 B1, entire text, all drawings & TW 434268 B & KR 10-1998-0063580 A & CN 1190101 A | 1-8 |
| A | JP 11-171949 A (ASAHI KASEI KOGYO CO., LTD.) 29 June 1999, entire text, all drawings (Family: none) | 1-8 |
| A | JP 2000-219781 A (KURARAY CO., LTD.) 08 August 2000, entire text (Family: none) | 1-8 |
| A | WO 2002/98521 A1 (KURARAY CO., LTD.) 12 December 2002, entire text & US 2004/0149292 A1, entire text & EP 1402927 A1 | 1-8 |
| A | JP 2003-342441 A (ZEON CORPORATION) 03 December 2003, entire text & US 6534593 B1, entire text & EP 1103577 A1 | 1-8 |
| A | JP 2006-142561 A (TOSOH CORPORATION) 08 June 2006, entire text, all drawings (Family: none) | 1-8 |
| A | JP 2006-143799 A (TOSOH CORPORATION) 08 June 2006, entire text (Family: none) | 1-8 |
| A | JP 2010-270314 A (BRIDGESTONE CORPORATION) 02 December 2010, entire text (Family: none) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006111650 A
- JP S59133203 A
- JP H1275605 A
- JP H5222115 A
- JP H790017 A